# EUROPÄISCHE PATENTSCHRIFT

(11) **EP 2 631 669 B1**
(45) Veröffentlichungstag und Bekanntmachung des Hinweises auf die Patenterteilung: **08.11.2017**
(21) Anmeldenummer: 12001226.5
(22) Anmeldetag: 24.02.2012
(51) Int. Cl.: G01S 7/497, G01S 17/02, G01S 17/06, B23K 26/12

(54) **Optische Einrichtung**
Optical system
Système optique

(43) Veröffentlichungstag der Anmeldung: 28.08.2013
(73) Patentinhaber: Sick AG, 79183 Waldkirch (DE)
(72) Erfinder: Wüstenfeld, Martin, 79350 Sexau (DE); Bauer, Robert, Dr., 79312 Emmendingen (DE)
(74) Vertreter: Manitz Finsterwald Patentanwälte PartmbB

(56) Entgegenhaltungen:
- EP-A2- 1 308 747
- WO-A2-2005/026772
- DE-C1- 10 025 511
- DE-C1- 19 732 776
- GB-A- 1 247 666
- US-A1- 2011 286 009

## Beschreibung

Die Erfindung betrifft eine optische Sensoreinrichtung mit einem optischen Sensor zur Überwachung eines Überwachungsbereichs, mit einer Erfassungseinrichtung zur Beobachtung eines den Überwachungsbereich umfassenden Erfassungsbereiches, die eine Sendeeinrichtung zur Aussendung von Sendelicht in dem Erfassungsbereich und einen Empfänger zum Empfang von aus dem Erfassungsbereich durch ein in diesem befindliches Objekt zurückreflektiertem oder zurückremittiertem oder durch den Erfassungsbereich transmittiertem Licht umfasst. Eine derartige optische Sensoreinrichtung ist bereits aus der EP 1 308 747 A2 bekannt.

Bekannte optische Sensoren umfassen z.B. eine Sendeeinheit zum Aussenden von Sendelicht in einen Detektionsbereich, einen Empfänger zum Empfangen von aus dem Detektionsbereich zurückreflektiertem oder zurückremittiertem Licht und eine Auswerteeinheit zum Auswerten des zurückreflektierten oder zurückremittierten Lichtes. Dabei kann es sich z.B. um Scannersysteme handeln, bei welchen ein z.B. von einem Laser erzeugter Lichtstrahl über eine Lichtablenkeinheit in einen Detektionsbereich gelenkt und dort von einem gegebenenfalls vorhandenen Objekt reflektiert oder remittiert wird. Das reflektierte bzw. remittierte Licht gelangt wieder zurück zu dem Scanner und wird dort von einem Empfänger detektiert. Die Lichtablenkeinheit ist oftmals schwenkbar bzw. drehbar ausgestaltet, so dass der von dem Laser erzeugte Lichtstrahl den durch die Schwenkbewegung erzeugten Detektionsbereich überstreicht. Wird ein vom Empfänger empfangenes reflektiertes oder remittiertes Lichtsignal empfangen, so kann aus der Winkelstellung der Ablenkeinheit auf die Winkellage des Objekts im Detektionsbereich geschlossen werden.

Andere optische Sensoren sind als abstandsmessende Sensoren ausgestaltet, die z.B. aus der Lichtdauer, die ein in einen Detektionsbereich eingestrahltes Lichtsignal nach Reflexion an einem Objekt in dem Detektionsbereich wieder zurück zum Sensor benötigt, auf die Entfernung des Objekts schließen können.

Eine Kombination eines solchen Scannersystems und eines abstandsmessenden Sensors kann eingesetzt werden, um zweidimensionale Schutzfelder vollständig zu überwachen. Ablenkung in einer weiteren Raumrichtung unter Verwendung mehrerer derartiger Scanner mit z.B. fächerförmig oder parallel zueinander angeordneten Schutzfeldern erlauben auch die Überwachung eines dreidimensionalen Raums (3D-Scanner).

Derartige Systeme werden z.B. bei fahrerlosen Transportsystemen eingesetzt, um Kollisionen zu vermeiden. Andere Anwendungen betreffen z.B. Maschinen, bei denen ein Gefahrenbereich überwacht werden muss, der beim Betrieb der Maschine von einer Bedienperson nicht verletzt werden darf. Es kann sich dabei z.B. um einen Roboterarbeitsbereich handeln. Wird mit Hilfe des Laserscanners die Anwesenheit eines unzulässigen Objekts - also z.B. eines Beins einer Bedienperson - im Gefahrenbereich festgestellt, wird ein Nothalt der Maschine bewirkt.

Solche Scannersysteme sind z.B. in DE 39 08 273 C1 oder EP 1 980 871 B1 beschrieben.

Andere optische Sensoren sind als Lichtschranke oder Lichtgitter ausgestaltet, die die Präsenz eines Objekts in einem Detektionsbereich durch Unterbrechung eines Lichtstrahls oder Reflexion des Lichtstrahls aus dem Detektionsbereich detektieren.

Zur Überprüfung der Funktionsfähigkeit, insbesondere zur zuverlässigen Objektdetektion und Objektlokalisierung in einem Sicherheitssystem ist eine Kontrolle der wichtigsten Leistungsfunktionen nötig. Bei bekannten Lösungen sind dazu Testobjekte im Überwachungsbereich des Sensors vorgesehen. Vor oder während der Messung wird geprüft, ob diese Testobjekte korrekt nachgewiesen werden. Aus der DE 198 00 968 C2 ist ein optischer Sensor bekannt, bei dem dazu ein im Inneren des Sensorgehäuses angeordnetes Testobjekt durch ein entsprechendes Eintrittsfenster beleuchtet wird. Aus der DE 39 08 273 C1 ist ein Scanner bekannt, bei dem durch Überwachung der Positionen mehrerer abgesetzter externer Testobjekte mit definierten Reflexionsgraden die Detektionsfähigkeit des Sensors überwacht werden kann.

Wichtig ist die Langzeitstabilität des Systems. Insbesondere im Outdoorbereich ist der Einsatz von Sicherheitsscannern daher oftmals problematisch, da Verschmutzung oder Feuchtigkeitsniederschlag an dem Testobjekt zu einer Reduzierung der Detektionszuverlässigkeit führen kann, was in nicht vorhersagbarem fehlerhaftem Ansprechen des Scanners resultieren kann.

Aus der EP 1 308 747 A2 ist eine optische Sensoreinrichtung zur Überwachung eines Überwachungsbereichs mit einer Erfassungseinrichtung zur Beobachtung des Überwachungsbereichs, die eine Sendeeinrichtung zur Aussendung von Sendelicht in den Überwachungsbereich und einen Empfänger zum Empfang von aus dem Überwachungsbereich zurückreflektiertem oder zurückremittiertem oder durch den Erfassungsbereich transmittiertem Licht umfasst, bekannt.

Bei einem aus der GB 1 247 666 A bekannten Verfahren zur Behandlung eines Werkstücks mittels Strahlungsenergie wie insbesondere einer Photonenstrahlung wird über einem zu behandelnden Abschnitt des Werkstücks eine halbkugelförmige Kammer angebracht, über die die Strahlung eingebracht wird. Zur optimalen Ausnutzung der Strahlung ist die Innenfläche der halbkugelförmigen Kammer mit einem Reflektor versehen, der vom Werkstück reflektierte Strahlung auf dieses Werkstück zurückreflektiert. Die für eine definierte Umgebung am Werkstück sorgende Kammer wird mit über das Werkstück strömendem Gas beaufschlagt, durch das bei der Beaufschlagung des Werkstücks mit der Strahlung entstehende gasförmige Reaktionsprodukte nach außen abgeführt werden.

In der WO 2005/026772 A2 ist ein Koordinatenmesssystem mit einer kardanischen Aufhängung beschrieben, das mit Mitteln zur Selbstkompensation von durch eine Temperaturdrift hervorgerufenen Fehlern versehen ist, die hinsichtlich der Position und Orientierung eines Laserstrahls bezüglich eines durch den mechanischen Drehpunkt der kardanischen Aufhängung definierten Kardanpunkts auftreten können. Dabei soll der Laserstrahl im Idealfall durch den Kardanpunkt verlaufen, während er im realen Betrieb aufgrund von Temperaturdriften jedoch gegenüber diesem Kardanpunkt meistens versetzt ist. Zudem soll der Laserstahl idealerweise senkrecht zu den mechanischen Zenit- und Azimutachsen verlaufen, wenn der Zenitwinkel auf 90° eingestellt ist. Im realen Betrieb ergeben sich jedoch auch hier regelmäßig Winkelabweichungen des Laserstrahls von der idealerweise geforderten Richtung. Für eine entsprechende Selbstkompensation werden auf einem Sockel der betreffenden Koordinatenmessvorrichtung angeordnete Zielscheiben verwendet, bei denen es sich um einen Spiegel und um einen Retroreflektor handeln kann.
In der US 2011/286009 A1 ist ein optischer Sensor zur Überwachung eines Überwachungsbereiches beschrieben, die ein innerhalb des Überwachungsbereiches angeordnetes Testobjekt umfasst. Dabei wird ein vom Testobjekt kommender Rückstrahl von einem von einem jeweiligen Objekt kommenden Rückstrahl dadurch unterschieden, dass das Testobjekt radial innerhalb des Überwachungsbereichs liegt und ein vom Testobjekt kommender Rückstrahl eine entsprechende kürzere Laufzeit besitzt.

Aufgabe der vorliegenden Erfindung ist es, eine optische Sensoreinrichtung anzugeben, die ein zuverlässiges Messergebnis gewährleistet und eine erhöhte Langzeitstabilität der Messung ermöglicht.

Diese Aufgabe wird mit einer optischen Sensoreinrichtung mit den Merkmalen des Anspruchs 1 gelöst. Bevorzugte Ausgestaltungen sind Gegenstand von Unteransprüchen.

Eine erfindungsgemäße Sensoreinrichtung mit einem optischen Sensor umfasst eine Erfassungseinrichtung zur Beobachtung eines den Überwachungsbereich umfassenden Erfassungsbereiches, die eine Sendeeinrichtung zur Aussendung von Sendelicht in den Erfassungsbereich und einen Empfänger zum Empfang von aus dem Erfassungsbereich durch ein in diesem befindliches Objekt zurückreflektiertem oder zurückemittiertem oder durch den Erfassungsbereich transmittiertem Licht umfasst, wenigstens ein vom zu erfassenden Objekt getrenntes Testobjekt innerhalb des Erfassungsbereiches des optischen Sensors, einen Speicher, in dem die Lage des Testobjekts abgelegt ist, so dass die beim Überstreichen des Erfassungsbereiches mit dem Sendelicht festgestellte Lage des Testobjekts mit der in dem Speicher abgelegten Lage des Testobjekts verglichen werden kann, und eine Einrichtung zur Vermeidung und/oder Beseitigung einer Verschmutzung des wenigstens einen Testobjekts. Dabei weist das wenigstens eine Testobjekt einen Reflexions- oder Remissionsgrad auf, der einem Vielfachen eines minimalen Reflexions- oder Remissionsgrades entspricht, wobei der Multiplikationsfaktor dem Quadrat des Verhältnisses des Abstands des Testobjekts von der Erfassungseinrichtung und der maximalen Ausdehnung des Überwachungsbereichs entspricht.

Der Begriff "Verschmutzung" soll dabei jegliche Form von von außen an das Testobjekt gelangender Fremdstoffe umfassen, also z.B. auch einen Feuchtigkeitsniederschlag oder ähnliches.

Mit der Einrichtung zur Vermeidung und/oder Beseitigung von Verschmutzung des wenigstens einen Testobjekts kann auf zuverlässige Weise sichergestellt werden, dass solche Verschmutzungen oder andere Fremdstoffe die korrekte Detektion des Testobjekts nicht behindern können. Dadurch ist die Langzeitstabilität auch in Umgebungen sichergestellt, die die Gefahr von solchen Verschmutzungen bergen, also z.B. beim Einsatz im Freien. Grundsätzlich können derartige Probleme aber auch bei Sensoren auftreten, die nicht im Freien benutzt werden, wenn z.B. in einer verschmutzungsträchtigen Atmosphäre gearbeitet wird. Indem die Lage des Testobjektes in einem Speicher abgelegt ist, kann die beim Überstreichen des Erfassungsbereiches mit dem Sendelicht festgestellte Lage des Testobjektes mit der erwarteten, d.h. gespeicherten Lage verglichen werden. Auf diese Weise kann sichergestellt werden, dass der optische Sensor korrekt funktioniert. Indem für das Testobjekt ein minimaler Reflexionsgrad berücksichtigt wird, der die Detektion des Testobjekts gewährleistet, werden die Reproduzierbarkeit und Zuverlässigkeit des Systems unter Verwendung von Testobjekten weiter erhöht und die Vorteile der Einrichtung zur Vermeidung und/oder Beseitigung einer Verschmutzung gut ausgenutzt. Vorteilhafterweise beträgt die Remission des Testobjekts wenigstens 2 %. Auf diese Weise sind die Normanforderungen zur minimalen Remission für Personendetektion gewährleistet, insbesondere wenn das Testziel im maximalen Abstand des jeweiligen programmierten Schutzfeldes positioniert wird.

Erfindungsgemäß weist das Testobjekt einen Reflexions- oder Remissionsgrad auf, der einem Vielfachen eines minimalen Reflexions- oder Remissionsgrads entspricht, vorzugsweise einem Vielfachen der oben angesprochenen 2 %-igen Remission, wobei der Multiplikationsfaktor dem Quadrat des Verhältnisses des Abstands des Testobjekts von dem Empfänger und der maximalen Ausdehnung des Überwachungsbereichs entspricht. Eine solche Auswahl des Reflexions- oder Remissionsgrades des Testobjekts trägt dem Umstand Rechnung, dass die Strahlungsintensität mit dem Quadrat des Abstands von der Strahlungsquelle abnimmt.

Eine bevorzugte Ausgestaltung der erfindungsgemäßen optischen Sensoreinrichtung weist zur Vermeidung und/oder Beseitigung von Verschmutzung des wenigstens einen Testobjekts eine Bewegungseinrichtung auf, mit deren Hilfe das Testobjekt bewegt werden kann. So kann bereits wirksam eine möglicherweise aufgetretene Verschmutzung z.B. durch Vibration oder schnelle Drehung entfernt werden.

Eine besonders bevorzugte Ausgestaltung sieht einen Ultraschallgeber vor, der das Testobjekt mit Ultraschall beaufschlägt, so dass ein Reinigungseffekt auftritt. Alternativ kann das Testobjekt auch auf einem Ultraschallträger montiert sein, der für die beschriebene Beaufschlagung des Testobjekts mit Ultraschall sorgt.

Eine weitere Ausführungsform sieht vor, dass die optische Sensoreinrichtung eine das wenigstens eine Testobjekt umgebende Einhausung, vorzugsweise einen Tubus, umfasst, der auf verschiedene Art und Weise zur Verhinderung und/oder Beseitigung von Verschmutzungen dienen kann. So kann bei einer besonders bevorzugten Ausgestaltung vorgesehen sein, dass die Einhausung mit einem Staudruck beaufschlagt wird, der verschmutzende Fremdstoffe durch die Strömung z.B. von Luft von dem Testobjekt fernhält.

Eine andere Ausführungsform mit einer Einhausung sieht eine Frontscheibe vor, die sich an der Einhausung auf derjenigen Seite befindet, die von dem Detektionslicht des optischen Sensors durchstrahlt wird. Bei ansonsten geschlossener Einhausung dient eine solche Frontscheibe auf wirksame Art und Weise der Verhinderung des Kontakts des Testobjekts mit der Umgebung und kann z.B. leicht gereinigt werden.

Zur Reinigung der Frontscheibe kann die optische Sensoreinrichtung z.B. eine Bewegungseinrichtung zur Bewegung der Frontscheibe oder einen Ultraschallgeber zur Beaufschlagung der Frontscheibe mit Ultraschall aufweisen. Andere Ausführungsformen sehen eine mechanische Reinigungsvorrichtung für die Frontscheibe, z.B. einen Scheibenwischer, vor.

Besonders vorteilhaft ist eine solche Frontscheibe, wenn sie nur für eine Wellenlänge oder einen Wellenlängenbereich durchlässig ist, die bzw. der von der Sendeeinrichtung verwendet wird. Auf diese Weise wird der Einfluss von Umgebungslicht auf die Qualität der Testung mit Hilfe des Testobjekts gewährleistet und der Einfluss von z.B. schädlichem UV-Licht auf die Langzeitstabilität des Testobjekts wird verringert.

Wenn die Frontscheibe schräg zur Richtung des von der Sendeeinrichtung auf das Testobjekt fallende Licht angeordnet ist, werden zusätzlich noch Reflexionen des Sendelichts verhindert, die eine Verfälschung des Testobjekts ergeben könnten.

Eine weitere Ausgestaltung sieht vor, dass die optische Sensoreinrichtung über eine Einrichtung zum Spülen des wenigstens einen Testobjekts mit einer Flüssigkeit, z.B. Wasser, oder einem Gas, z.B. Luft, verfügt, die vor oder während des tatsächlichen Betriebs die optischen Sensoreinrichtung zur Reinigung des Testobjekts eingesetzt wird.

Vorteilhafterweise ist die Größe des Testziels derart gewählt, dass sie dem Strahldurchmesser des Sendelichts bzw. der geometrischen Auflösung des Sensors entspricht. Auf diese Weise wird das eingestrahlte Licht optimal bei der Testung der Funktionsfähigkeit des optischen Sensors zum Einsatz gebracht.

Werden mehrere Testobjekte eingesetzt, können diese räumlich gegeneinander versetzt sein, um an unterschiedlichen Stellen des Erfassungsbereichs eine optimale Überprüfung der Funktionsfähigkeit des Sensors zu gewährleisten. Dies kann vorteilhaft sein, wenn an unterschiedlichen Orten des Überwachungsbereichs mit unterschiedlichen Verschmutzungsgraden gerechnet werden muss.

Andererseits kann z.B. durch eine räumliche Bewegung des Testobjekts sichergestellt werden, dass es zu unterschiedlichen Zeitpunkten unterschiedlichen Umgebungsbedingungen ausgesetzt ist, so dass aus unerwarteten Abweichungen auf eine Funktionsstörung geschlossen werden kann und nicht durch z.B. eine besonders verschmutzungsträchtige Umgebung oder besonders feuchte Umgebung an einer Stelle des Überwachungsbereichs die Messung im gesamten Überwachungsbereich gefährdet ist. Außerdem kann bei einer solchen Ausgestaltung die Bewegung des Testobjekts selber zur Überprüfung der Funktionsfähigkeit des Sensors eingesetzt werden, wenn eine (z.B. in einem vorherigen Testlauf abgespeicherte) erwartete Bewegung des Testobjekts z.B. mit der tatsächlich beobachteten Bewegung verglichen wird.

Schließlich ist es auch möglich, dass das Testobjekt selbst auf andere Weise verändert wird, z.B. indem es gedreht wird. Eine solche Drehung dient zum einen zur wirksamen Entfernung von Verschmutzungen und kann zum anderen ausgenutzt werden, um die Funktionsfähigkeit des Sensors noch zusätzlich dadurch zu testen, dass das gemessene Drehverhalten mit einem erwarteten Drehverhalten verglichen wird.

Ist das wenigstens eine Testobjekt zwar im Erfassungsbereich, jedoch außerhalb des Überwachungsbereiches angeordnet, so ist seine Detektion sichergestellt, obwohl es die Überwachung des Überwachungsbereiches nicht behindert. Andererseits kann es bei entsprechenden Anwendungen vorteilhaft sein, wenn das wenigstens eine Testobjekt innerhalb des Überwachungsbereiches angeordnet ist, um die Funktionsfähigkeit des Sensors mit Hilfe eines Testobjektes zu testen, das sich in genau selben Bereich befindet, in dem gegebenenfalls zu detektierende Objekte nachgewiesen werden müssen.

Die erfindungsgemäße Einrichtung zur Vermeidung oder Beseitigung von Verschmutzungen des Testobjekts kann bei verschiedenen optischen Sensoren zum Einsatz kommen. So sind z.B. abstandsmessende Sensoren, tastende Lichtgitter, zweidimensionale und dreidimensionale Scanner oder kamerabasierte Sensoren möglich.

Die Erfindung wird anhand der beiliegenden Figuren im Detail erläutert, die schematisch unterschiedliche Ausführungsformen und Ausgestaltungen einer optischen Sensoreinrichtung darstellen, jedoch nicht maßstabsgetreu zu verstehen sind; es zeigen
- Fig. 1: eine Draufsicht auf eine optische Sensoreinrichtung einer erfindungsgemäßen Ausführungsform,
- Fig. 2: eine Abwandlung der Ausführungsform der Fig. 1,
- Fig. 3: ein Detail einer weiteren erfindungsgemäßen Ausführungsform,
- Fig. 4: eine Abwandlung dieser Ausführungsform,
- Fig. 5: ein Detail einer weiteren erfindungsgemäßen Ausführungsform,
- Fig. 6: eine Abwandlung einer solchen Ausführungsform und
- Fig. 7: eine weitere Abwandlung dieser Ausführungsform.

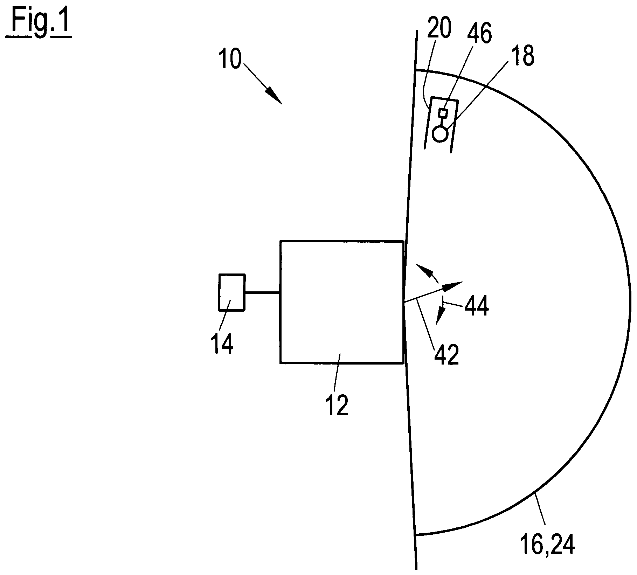

Fig. 1 zeigt die Draufsicht auf eine optische Sensoreinrichtung 10 mit einer Erfassungseinrichtung 12. Die Erfassungseinrichtung umfasst im vorliegenden Fall eine Vorrichtung zur Aussendung von Sendelicht 42 in einem Erfassungsbereich 24. Die Signale der Erfassungseinrichtung 12 können in der Auswerteeinrichtung 12 ausgewertet werden. Der Lichtstrahl 42 wird mit Hilfe einer Ablenkeinrichtung in an sich bekannter Weise entlang des Doppelpfeils 44 hin- und hergeschwenkt. Wird der Lichtstrahl 42 während dieser Schwenkbewegung z.B. von einem Objekt im Erfassungsbereich 24 reflektiert, so fällt es zurück in Richtung der Erfassungseinrichtung 12 und wird dort in an sich bekannter Weise von einem Empfänger, z.B. einem Fotodiodenarray, registriert. Aus der Lichtlaufzeit, die das Sendelicht 42 vom Aussenden über die Reflexion bis zum Auftreffen auf den Empfänger benötigt, kann mit Hilfe der Lichtgeschwindigkeit auch der Abstand eines Objekts im Erfassungsbereich 24 festgestellt werden.

Bei der optischen Sensoreinrichtung 10, die in der Ausführungsform der Fig. 1 gezeigt ist, handelt es sich dementsprechend um einen Lichtscanner. Das Sendelicht selbst wird z.B. mit Hilfe eines Lasers erzeugt.

Der Scanner 10 dient zur Überwachung eines Überwachungsbereichs 16. Im vorliegenden Beispiel entspricht dieser Überwachungsbereichs 16 dem Erfassungsbereich 24, der mit dem Scanner 10 erfasst werden kann.

Der Erfassungsbereich 24 definiert sich dabei dadurch, dass er dem maximalen Bereich entspricht, der mit Hilfe des optischen Sensors 10 erfasst werden kann. Im Erfassungsbereich 24 ist also z.B. die korrekte Feststellung des Abstandes eines Objekts möglich. Obwohl dieser Erfassungsbereich 24 nicht notwendigerweise mit dem tatsächlich überwachten Bereich 16 übereinstimmen muss, ist es bei der Ausführungsform der Fig. 1 der Fall.

Im Erfassungsbereich 24 befindet sich ein Testobjekt 18. Seine Lage ist z.B. in der Auswerteeinheit 14 in einem Speicher abgelegt, so dass beim Überstreichen des Erfassungsbereichs 24 mit dem Sendelicht 42 die Lage des Testobjekts 18 wie beschrieben festgestellt und dann mit der erwarteten Lage verglichen werden kann. Auf diese Weise kann sichergestellt werden, dass der optische Sensor 10 korrekt funktioniert. Wird z.B. das Testobjekt 18 gar nicht oder nicht an der erwarteten Stelle nachgewiesen, so liegt eine Fehlfunktion des Scanners vor, z.B. eine defekte Lichtquelle oder ein defekter Empfänger.

Um diese Testung sicher durchführen zu können, muss sichergestellt sein, dass die Reflektivität bzw. Remission des Testobjekts 18 weitgehend gleich bleibend ist. Dazu ist es notwendig, dass das Testobjekt 18 vor Verschmutzungen geschützt wird und/oder gereinigt werden kann.

Bei der Ausführungsform der Fig. 1 weist das Testobjekt 18 dazu eine Verbindung zu einem Ultraschallgeber 46 auf. Zum Beispiel kann es auf einem Ultraschallträger montiert sein. Durch die so mögliche Ultrabeschallung ist eine Reinigung des Testobjekts 18 auf leichte Weise möglich. Außerdem kann durch eine kontinuierliche Ultrabeschallung sichergestellt werden, dass Verschmutzungen sich überhaupt nicht erst an dem Testobjekt 18 festsetzen.

Außerdem weist die Ausführungsform der Fig. 1 eine tubusartige Einhausung 20 auf, die das Testobjekt 18 insbesondere seitlich schützt, um Verschmutzungseintrag von dort zu verhindern.

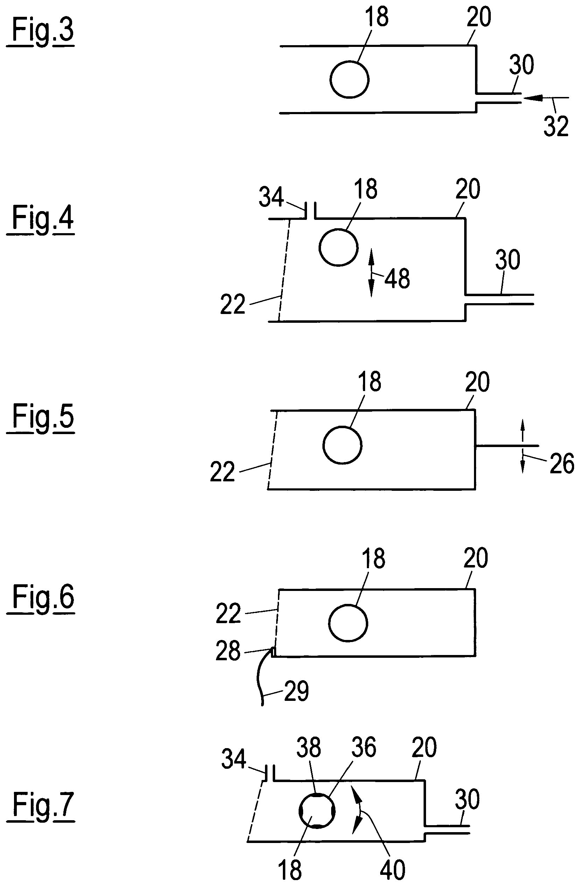

Fig. 3 bis 7 zeigen beispielhaft andere Ausführungsformen, wie das Testobjekt ausgestaltet sein kann. Fig. 3 zeigt z.B. eine Ausführungsform, bei der durch einen Zuführkanal 30 Luft 32 in die Einhausung 20 eingeblasen werden kann, so dass sich eine Art Staudruck bildet, der Verschmutzungen von dem Testobjekt 18 fernhält. Fig. 4 zeigt eine Ausführungsform, bei der zusätzlich eine Frontscheibe 22 vorgesehen ist, die das Testobjekt 18 in Richtung der Erfassungseinrichtung 12 abschließt. Eine solche Frontscheibe dient der weiteren Verschmutzungsverhinderung des Testobjekts 18. In der Ausführungsform der Fig. 4 ist außerdem ein Ausgang 34 gezeigt, durch den der Luftstaudruck, der durch den Kanal 30 in die Einhausung 20 geführt wird, wieder entweichen kann.

Fig. 4 zeigt eine weitere Verbesserung des Systems, bei der das Testobjekt 18 in Richtung des Doppelpfeils 48 bewegt werden kann. Allein diese Bewegung dient der weiteren Verhinderung von möglichen Verschmutzungen. Außerdem kann diese Bewegung ausgenutzt werden, um nicht nur die Präsenz des Testobjekts nachweisen zu können, sondern auch seine Bewegung. Auf diese Weise ist eine noch genauere Kontrolle der Scannerfunktion möglich. Das Testobjekt 18 kann auch auf andere Weise verändert werden, z.B. als Lichtquelle ausgestaltet sein und durch periodisches Ein- und Ausschalten geprüft werden, ob der Scanner diese Beleuchtungsveränderung feststellen kann.

Fig. 5 zeigt eine Ausführungsform, bei der das Testobjekt 18 ebenfalls in einer geschlossenen Einhausung 20 aufgenommen ist, die durch eine Frontscheibe 22 abgeschlossen ist. Mit Hilfe einer Bewegungseinrichtung 26 ist es möglich, die gesamte Einhausung und also insbesondere die Frontscheibe 22 zu bewegen, z.B. in Vibration zu versetzen, so dass eine Verschmutzung der Frontscheibe 22 wirksam verhindert werden kann. Nachdem das Testobjekt 18 sich innerhalb der Einhausung 20 befindet, ist damit wirksam verhindert, dass das Testobjekt 18 verschmutzt wird oder eine Verschmutzung die Testmessung des Scanners beeinflussen würde.

Fig. 6 zeigt eine ähnliche Ausgestaltung wie die der Fig. 5, wobei hier die Frontscheibe 22 mit einem Ultraschallgeber 28 (mit einer Versorgungsleitung 29) verbunden ist und auf diese Weise mit Ultraschall beschallt werden kann, um eine Reinigung der Frontscheibe 22 zu gewährleisten.

Fig. 7 zeigt eine Abwandlung der Ausgestaltung der Fig. 4, bei der durch den Kanal 30 Luft durch die Einhausung 20 und den Ausgang 34 geführt werden kann, um das Testobjekt 18 sauber zu halten. Das Testobjekt 18 selbst kann in Richtung des Doppelpfeiles 40 gedreht werden. In der gezeigten Ausgestaltung weist das Testobjekt 18 unterschiedliche Bereiche 36, 38 unterschiedlicher Reflektivität auf. So sind z.B. die Bereiche 38 dunkler als die Bereiche 36. Durch die Drehung in Richtung des Doppelpfeiles 40 entsteht für den Lichtstrahl 42 des Scanners 10 ein periodisch wechselndes Reflektivitätsmuster, so dass mit dem Scanner 10 nicht nur die Präsenz des Testobjekts nachgewiesen werden kann, sondern auch eine zeitliche Veränderung.

Um Reflexionen des in die Einhausung 20 eintretenden Lichts zu verhindern, wird die Frontscheibe 22 z.B. schräg zum Strahlengang angeordnet. Die Frontscheibe 22 ist vorteilhafterweise nur für die Wellenlänge des Sendelichts 42 durchlässig, so dass sich der Einfluss von Umgebungsluft auf die Qualität der Testung oder der Einfluss von gegebenenfalls für das Testobjekt 18 schädlichen UV-Lichts verringert.

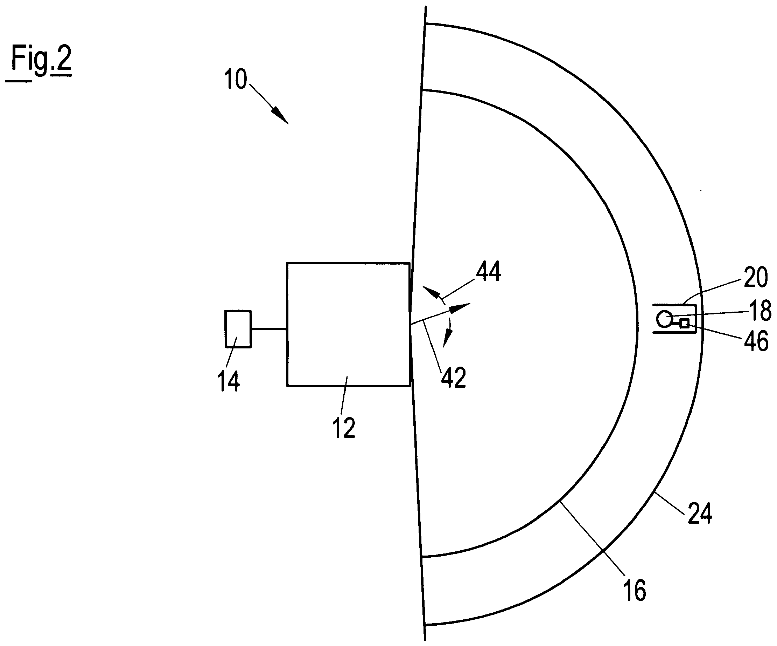

Die in den Figuren gezeigten Möglichkeiten, eine Einrichtung auszugestalten, mit der eine Verschmutzung des Testobjekts verhindert oder beseitigt werden kann, können selbstverständlich auf unterschiedliche Weise miteinander kombiniert werden, ohne dass eine Kombination vorliegen muss, die in den Figuren auch gezeigt ist. So ist es z.B. möglich, den in den Fig. 1 und 2 gezeigten Ultraschallgeber 46 in einem System mit einer Frontscheibe 22 einzusetzen oder zusätzlich einen Luftstaudruck mit Hilfe eines Kanals 30 vorzusehen. Außerdem ist es möglich, auch ein Testobjekt 18, das mit Hilfe eines Ultraschallgebers 46 bewegt wird, in Drehung zu versetzen, wie es bei der Ausgestaltung der Fig. 7 beispielhaft erläutert ist.

Eine Ausgestaltung, die Staudruck zur Reinigung des Testobjekts 18 einsetzt, wie es z.B. in Fig. 4 gezeigt ist, kann mit einer Frontscheibe 22 kombiniert werden, die entsprechend der in Fig. 6 gezeigten Ausgestaltung mit einer Reinigungsvorrichtung, hier einem Ultraschallgeber 28, zur Reinigung der Frontscheibe versehen ist. Eine Bewegung der Einhausung 20, wie sie in Fig. 5 gezeigt ist, kann selbstverständlich ebenfalls mit anderen zusätzlichen Einrichtungen kombiniert werden, die zur Beseitigung oder Veränderung der Verschmutzung des Testziels 18 vorgesehen sind, also z.B. der Beaufschlagung mit einem Staudruck 32 durch einen Kanal 30. Entsprechende Anordnungen können je nach Bedarf und Notwendigkeiten kombiniert werden.

Grundsätzlich ist es auch möglich, dass das Testobjekt dauerhaft mit einem Luftstrom oder einem Wasserstrom gespült wird, um Verschmutzungen sofort entfernen zu können.

In Fig. 2 ist eine Ausgestaltung gezeigt, bei der der Erfassungsbereich 24 nicht dem überwachten Bereich 16 entspricht. Bei einer solchen Ausgestaltung wird die optische Sensoreinrichtung 10 zur Feststellung von Objekten im Überwachungsbereich 16 verwendet. Nachdem der Erfassungsbereich 24, der mit der optischen Sensoreinrichtung 10 sicher erfasst werden kann, jedoch größer ist, kann sich außerhalb des Überwachungsbereichs 16 - aber noch innerhalb des Erfassungsbereichs 24 - eine Anordnung mit einem Testobjekt 18 befinden, wie sie z.B. mit Bezug zu Fig. 1 beschrieben worden ist. Nur beispielhaft ist hier die entsprechende Anordnung frontal gegenüber der Erfassungseinrichtung 12 gezeigt. Entscheidend für diese Ausführungsform ist, dass sich das Testobjekt 18 zwar außerhalb des Überwachungsbereiches 16 befindet - so dass es eine Überwachung dieses Bereiches nicht behindert - jedoch innerhalb des Erfassungsbereichs 24, um sicher detektiert werden zu können, um die Funktionsfähigkeit des Scanners 10 zu testen.

Die Remission des Testobjekts 18 kann z.B. 2 % betragen und damit der Normanforderung zur minimalen Remission von Personendetektion entsprechen. Wird ein solches Testobjekt 18 am von der Erfassungseinrichtung 12 entfernten Rand des Überwachungsbereichs 16 eingesetzt, so ist sichergestellt, dass auch am Rand des Überwachungsbereichs 16 noch eine sichere Detektion von Objekten mit einer geringen Remission von 2 % möglich ist.

Bei der Ausgestaltung der Fig. 2 befindet sich das Testobjekt 18 außerhalb des Erfassungsbereichs 16. Hier kann die Remission z.B. ein Vielfaches der genannten 2 % betragen, wobei der Multiplikationsfaktor dem Quadrat des Verhältnisses vom Abstand des Testobjekts 18 von dem der Erfassungseinrichtung 12 und der maximalen Ausdehnung des Überwachungsbereichs 16 entsprechen. Die auf diese Weise skalierte Remission eines außerhalb des Schutzbereichs 16 befindlichen Testobjekts 18 entspricht einer 2 %-igen Remission eines Objekts, das sich direkt am äußeren Rand des Überwachungsbereichs 16 befindet (Abstandsquadratgesetz).

Die Größe des Testobjektes 18 kann vorteilhafterweise etwa so gewählt sein, dass sie zumindest dem Strahldurchmesser bzw. der geometrischen Auflösung der optischen Sensoreinrichtung 10 entspricht.

Alle beschriebenen Aspekte zur Reinigung oder Verhinderung der Verschmutzung des Testobjekts 18 dienen auch in vorteilhafter Weise der Langzeitstabilität der Sensoreinrichtung 10.

Der Begriff der "Verschmutzung" wird hier für all diejenigen Fremdbelastungen des Testobjektes verwendet, die die Reflexion oder Remission des Testobjektes ändern und somit die Detektion behindern können, wie z.B. Schmutz, Feuchtigkeit, Niederschlag, Beschlag o.ä.

### Bezugszeichenliste

- 10: optischer Sensor
- 12: Erfassungseinrichtung
- 14: Auswerteeinrichtung
- 16: Überwachungsbereich
- 18: Testobjekt
- 20: Tubus
- 22: Frontscheibe
- 24: Erfassungsbereich
- 26: Vibrationseinrichtung
- 28: Ultraschallgeber
- 29: Versorgungsleitung
- 30: Luftkanal
- 32: Luftstrom
- 34: Luftausgang
- 36: heller Bereich
- 38: dunkler Bereich
- 40: Drehbewegung
- 42: Sendelicht
- 44: Schwenkbewegung
- 46: Ultraschallgeber

## Patentansprüche

1. Optische Sensoreinrichtung mit einem optischen Sensor (10) zur Überwachung eines Überwachungsbereiches (16), mit
- einer Erfassungseinrichtung (12) zur Beobachtung eines den Überwachungsbereich (16) umfassenden Erfassungsbereiches (24), die eine Sendeeinrichtung zur Aussendung von Sendelicht (42) in den Erfassungsbereich (24) und einen Empfänger zum Empfang von aus dem Erfassungsbereich (24) durch ein in diesem befindliches Objekt zurückreflektiertem oder zurückremittiertem oder durch den Erfassungsbereich transmittiertem Licht umfasst,
- wenigstens einem vom zu erfassenden Objekt getrennten Testobjekt (18) innerhalb des Erfassungsbereiches (24) des optischen Sensors (10),
- einem Speicher, in dem die Lage des Testobjektes (18) abgelegt ist, so dass die beim Überstreichen des Erfassungsbereiches (24) mit dem Sendelicht (22) festgestellte Lage des Testobjektes (18) mit der in dem Speicher abgelegten Lage des Testobjektes verglichen werden kann, die optische Sensoreinrichtung **gekennzeichnet durch**:
- einen Reflexions- oder Remissionsgrad des Testobjekts (18), der einem Vielfachen eines minimalen Reflexions- oder Remissionsgrades, vorzugsweise einem Vielfachen von 2%, entspricht, wobei das Vielfache mit einem Multiplikationsfaktor berechnet ist, der dem Quadrat des Verhältnisses des Abstandes des Testobjektes von der Erfassungseinrichtung und der maximalen Ausdehnung des Überwachungsbereichs entspricht, und
- eine Einrichtung (20, 22, 26; 20, 22, 28; 20, 30, 32, 34; 46) zur Vermeidung und/oder Beseitigung einer Verschmutzung des wenigstens einen Testobjektes (18) zur Aufrechterhaltung einer vorgegebenen Remissions- bzw. Reflexionseigenschaft des Testobjektes (18), die
(i) eine Bewegungseinrichtung, vorzugsweise einen Ultraschallgeber (46), zur Bewegung des wenigstens einen Testobjekts (18) umfasst um aufgetretene Verschmutzung zu entfernen, oder
(ii) eine das wenigstens eine Testobjekt umgebende Einhausung, vorzugsweise einen Tubus (20), und einen Kanal (30) zur Beaufschlagung des Inneren der Einhausung (20) mit einem Staudruck (32), vorzugsweise einem Luftstaudruck, umfasst, oder
(iii) eine Einrichtung zum Spülen des wenigstens einen Testobjektes (18) mit einer Flüssigkeit, vorzugsweise Wasser, oder einem Gas, vorzugsweise Luft, umfasst.

2. Optische Sensoreinrichtung nach Anspruch 1, **dadurch gekennzeichnet, dass** die Einrichtung zur Vermeidung und/oder Beseitigung der Verschmutzung eine das Testobjekt umgebende Einhausung umfasst, wobei die Einhausung (20) geschlossen ist und zumindest auf einer Seite eine Frontscheibe (22) umfasst und wobei die Frontscheibe (22) mit einer Bewegungseinrichtung (26) zur Bewegung zumindest der Frontscheibe (22) um aufgetretene Verschmutzung zu entfernen oder mit einem Ultraschallgeber (28) zur Beaufschlagung der Frontscheibe (22) mit Ultraschall verbunden ist.

3. Optische Sensoreinrichtung nach einem der Ansprüche 1 oder 2, **dadurch gekennzeichnet, dass** die Einrichtung zur Vermeidung und/oder Beseitigung der Verschmutzung eine das Testobjekt umgebende Einhausung umfasst, wobei die Einhausung (20) geschlossen ist und zumindest auf einer Seite eine Frontscheibe (22) umfasst und wobei die Frontscheibe (22) über eine mechanische Reinigungseinrichtung, insbesondere einen Scheibenwischer, verfügt.

4. Optische Sensoreinrichtung nach einem der Ansprüche 1 bis 3, **dadurch gekennzeichnet, dass** die Einrichtung zur Vermeidung und/oder Beseitigung der Verschmutzung eine das Testobjekt umgebende Einhausung umfasst, wobei die Einhausung (20) geschlossen ist und zumindest auf einer Seite eine Frontscheibe (22) umfasst und wobei die Frontscheibe (22) nur für eine Wellenlänge oder einen Wellenlängenbereich durchlässig ist, die bzw. der von der Sendeeinrichtung verwendet wird.

5. Optische Sensoreinrichtung nach einem der Ansprüche 1 bis 4, **dadurch gekennzeichnet, dass** die Einrichtung zur Vermeidung und/oder Beseitigung der Verschmutzung eine das Testobjekt umgebende Einhausung umfasst, wobei die Einhausung (20) geschlossen ist und zumindest auf einer Seite eine Frontscheibe (22) umfasst und wobei die Frontscheibe (22) schräg zu der Richtung des von der Sendeeinrichtung auf das wenigstens eine Testobjekt (18) fallenden Lichtes angeordnet ist.

6. Optische Sensoreinrichtung nach einem der Ansprüche 1 bis 5, **dadurch gekennzeichnet, dass** das wenigstens eine Testobjekt (18) eine Größe hat, die dem Durchmesser des Sendelichtstrahls (42) am Ort des Testobjektes (18) entspricht.

7. Optische Sensoreinrichtung nach einem der Ansprüche 1 bis 6, **dadurch gekennzeichnet, dass** mehr als ein Testobjekt (18) eingesetzt werden, die räumlich gegeneinander versetzt sind.

8. Optische Sensoreinrichtung nach einem der Ansprüche 1 bis 7 **dadurch gekennzeichnet, dass** das wenigstens eine Testobjekt (18) veränderlich, insbesondere beweglich, ist.

## Claims

1. An optical sensor device having an optical sensor (10) for monitoring a monitored zone (16), comprising
- a detection device (12) for observing a detection zone (24) comprising the monitored zone (16), said detection device comprising a transmission device for transmitting transmission light (42) into the detection zone (24) and a receiver for receiving light reflected back or remitted back from the detection zone (24) though an object located therein or transmitted through the detection zone;
- at least one test object (18), separate from the object to be detected, within the detection zone (24) of the optical sensor (10); and
- a memory in which the position of the test object (18) is stored such that the position of the test object (18) determined on the sweeping over of the detection zone (24) by the transmission light (22) can be compared with the position of the test object stored in the memory,
said optical sensor device being **characterized by**:
- a degree of reflection or remission of the test object (18) which corresponds to a multiple of a minimal degree of reflection or remission, preferably to a multiple of 2%, wherein the multiple is calculated using a multiplication factor which corresponds to the square of the ratio of the distance of the test object from the detection device and to the maximum extent of the monitored zone; and
- a device (20, 22, 26; 20, 22, 28; 20, 30, 32, 34; 46) for avoiding and/or eliminating a contamination of the at least one test object (18) to maintain a predefined remission property or reflection property of the test object (18), said device
(i) comprising a movement device, preferably an ultrasound generator (46), for moving the at least one test object (18) in order to remove contamination which has occurred; or
(ii) comprising a housing, preferably a tube (20), surrounding the at least one test object; and a passage (30) for applying a ram pressure (32), preferably a ram air pressure, to the interior of the housing (20); or
(ii) comprising a device for rinsing the at least one test object (18) with a liquid, preferably water, or with a gas, preferably air.

2. An optical sensor device in accordance with claim 1, **characterized in that** the device for avoiding and/or eliminating the contamination comprises a housing surrounding the test object, with the housing (20) being closed and comprising a front screen (22) at at least one side; and with the front screen (22) being connected to a movement device (26) for moving at least the front screen (22) in order to remove contamination which has occurred or to an ultrasonic generator (28) for applying ultrasound to the front screen (22).

3. An optical sensor device in accordance with one of the claims 1 or 2, **characterized in that** the device for avoiding and/or eliminating the contamination comprises a housing surrounding the test object, with the housing (20) being closed and comprising a front screen (22) at at least one side; and with the front screen (22) having a mechanical cleaning device, in particular a screen wiper.

4. An optical sensor device in accordance with any one of the claims 1 to 3, **characterized in that** the device for avoiding and/or eliminating the contamination comprises a housing surrounding the test object, with the housing (20) being closed and comprising a front screen (22) at at least one side; and with the front screen (22) only being permeable for a wavelength or a wavelength range which is used by the transmission device.

5. An optical sensor device in accordance with any one of the claims 1 to 4, **characterized in that** the device for avoiding and/or eliminating the contamination comprises a housing surrounding the test object, with the housing (20) being closed and comprising a front screen (22) at at least one side; and with the front screen (22) being arranged obliquely to the direction of the light incident from the transmission device onto the at least one test object (18).

6. An optical sensor device in accordance with any one of the claims 1 to 5, **characterized in that** the at least one test object (18) has a size which corresponds to the diameter of the transmission light beam (42) at the position of the test object (18).

7. An optical sensor device in accordance with any one of the claims 1 to 6, **characterized in that** more than one test object (18) is used, said test objects being offset from one another spatially.

8. An optical sensor device in accordance with any one of the claims 1 to 7, **characterized in that** the at least one test object (18) is changeable, in particular movable.

## Revendications

1. Dispositif capteur optique comportant un capteur optique (10) pour surveiller une zone à surveiller (16), comportant
- un moyen de détection (12) pour observer une zone de détection (24) incluant la zone à surveiller (16), qui comprend un moyen émetteur pour émettre une lumière d'émission (42) dans la zone de détection (24) et un récepteur pour recevoir une lumière réfléchie ou rémise depuis la zone de détection (24) par un objet situé dans celle-ci, ou transmise à travers la zone de détection,
- au moins un objet test (18) séparé de l'objet à détecter à l'intérieur de la zone de détection (24) du capteur optique (10),
- une mémoire dans laquelle est mémorisée la position de l'objet test (18), de sorte que la position de l'objet test (18), constatée lors du passage de la lumière d'émission (22) par-dessus la zone de détection (24), peut être comparée à la position de l'objet test mémorisée dans la mémoire,
et le dispositif capteur optique est **caractérisé par**
- un facteur de réflexion ou de rémission de l'objet test (18), qui correspond à un multiple d'un facteur de réflexion ou de rémission minimal, de préférence à un multiple de 2 %, le multiple étant calculé par un facteur de multiplication qui correspond au carré de la relation entre la distance de l'objet test depuis le dispositif de détection de l'extension maximale de la zone à surveiller, et
- un dispositif (20, 22, 26; 20, 22, 28; 20, 30, 32, 34; 46) pour éviter et/ou éliminer un encrassement dudit au moins un objet test (18) afin de conserver une propriété de rémission ou de réflexion prédéterminée de l'objet test (18), qui
(i) comprend un moyen de mouvement, de préférence un émetteur d'ultrasons (46) pour déplacer ledit au moins un objet test (18) pour éliminer des encrassements apparus, ou
(ii) une enceinte entourant ledit au moins un objet test, de préférence un tube (20), et un canal (30) pour solliciter l'intérieur de l'enceinte (20) par une pression dynamique (32), de préférence une pression dynamique d'air, ou
(iii) un moyen pour rincer ledit au moins un objet test (18) avec un liquide, de préférence de l'eau, ou avec un gaz, de préférence de l'air.

2. Dispositif capteur optique selon la revendication 1,
**caractérisé en ce que**
pour éviter et/ou éliminer des encrassements, le dispositif comprend une enceinte entourant l'objet test, l'enceinte (20) étant fermée et comprenant au moins sur un côté une plaque frontale (22), et la plaque frontale (22) est reliée à un moyen de mouvement (26) pour déplacer au moins la plaque frontale (22), afin d'éliminer des encrassements apparus,
ou un émetteur d'ultrasons (28) pour solliciter la plaque frontale (22) par des ultrasons.

3. Dispositif capteur optique selon l'une des revendications 1 ou 2,
**caractérisé en ce que**
pour éviter et/ou éliminer des encrassements, le dispositif comprend une enceinte entourant l'objet test, l'enceinte (20) étant fermée et comprenant au moins sur un côté une plaque frontale (22), et la plaque frontale (22) dispose d'un moyen de nettoyage mécanique, en particulier d'un essuie-glace.

4. Dispositif capteur optique selon l'une des revendications 1 à 3,
**caractérisé en ce que**
pour éviter et/ou éliminer des encrassements, le dispositif comprend une enceinte entourant l'objet test, l'enceinte (20) étant fermée et comprenant au moins sur un côté une plaque frontale (22), et la plaque frontale (22) n'est transparente que vis-à-vis d'une longueur d'onde ou vis-à-vis d'une plage de longueur d'onde qui est utilisée par le moyen émetteur.

5. Dispositif capteur optique selon l'une des revendications 1 à 4,
**caractérisé en ce que**
pour éviter et/ou éliminer des encrassements, le dispositif comprend une enceinte entourant l'objet test, l'enceinte (20) étant fermée et comprenant au moins sur un côté une plaque frontale (22), et la plaque frontale (22) est disposée en oblique par rapport à la direction de la lumière incident depuis le moyen émetteur sur ledit au moins un objet test (18).

6. Dispositif capteur optique selon l'une des revendications 1 à 5,
**caractérisé en ce que**
ledit au moins un objet test (18) a une taille qui correspond au diamètre du faisceau de lumière émise (42) à l'emplacement de l'objet test (18).

7. Dispositif capteur optique selon l'une des revendications 1 à 6,
**caractérisé en ce que**
plus d'un objet test (18) sont utilisés qui sont décalés dans l'espace l'un par rapport à l'autre.

8. Dispositif capteur optique selon l'une des revendications 1 à 7,
**caractérisé en ce que**
ledit au moins un objet test (18) est variable, en particulier mobile.
